# FASCICULE DE BREVET EUROPEEN

(11) **EP 1 106 630 B1**
(45) Date de publication et mention de la délivrance du brevet: **07.09.2005**
(21) Numéro de dépôt: 00403258.7
(22) Date de dépôt: 22.11.2000
(51) Int. Cl.: C08F 220/24

(54) **Nouveaux copolymères fluorés pour le traitement hydrophobe et oléophobes de substrats divers**
Neue fluorhaltige Copolymerisate für die Öl- und wasserabweisende Behandlung von Substraten
Fluorocopolymers for oil repelling and waterproofing treatment of various substrates

(30) Priorité: 06.12.1999 FR 9915321
(43) Date de publication de la demande: 13.06.2001
(73) Titulaire: E.I. DU PONT DE NEMOURS AND COMPANY, Wilmington, DE 19898 (US)
(72) Inventeur: Juhue, Didier, 27200 Vernon (FR); Pabon, Martial, 92400 Courbevoie (FR); Tembon N'Zudie, Denis, 27470 Serquigny (FR); Corpart, Jean-Marc, 95110 Sannois (FR); Lina, Marie-José, 69005 Lyon (FR)
(74) Mandataire: Abitz, Walter

(56) Documents cités:
- EP-A- 0 542 598
- WO-A-97/39072
- WO-A-99/65959
- FR-A- 2 722 791
- FR-A- 2 756 290
- US-A- 4 366 299

## Description

La présente invention a pour objet de nouveaux copolymères fluorés et leur utilisation pour le revêtement et l'imprégnation de substrats divers tels que textiles, cuirs, bois, non-tissés, métaux, béton, pierres et, plus particulièrement, papiers et articles similaires, dans le but de les rendre oléophobes et hydrophobes. Elle concerne également les substrats ainsi traités.

Pour atteindre ce but, de nombreux dérivés fluorés ont déjà été proposés.

La demande internationale WO 98/23657 enseigne ainsi des copolymères fluorés cationiques susceptibles d'être obtenus par copolymérisation de :
- 50 à 92 % en poids d'un ou plusieurs monomères polyfluorés de formule générale : 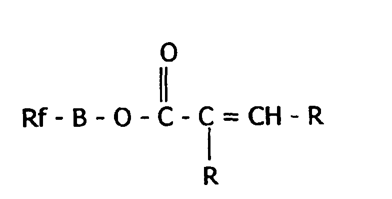 dans laquelle Rf représente un radical perfluoré à chaîne droite ou ramifiée, contenant 2 à 20 atomes de carbone, de préférence 4 à 16 atomes de carbone, B représente un enchaînement bivalent lié à O par un atome de carbone et pouvant comporter un ou plusieurs atomes d'oxygène, de soufre et/ou d'azote, l'un des symboles R représente un atome d'hydrogène et l'autre un atome d'hydrogène ou un radical alkyle contenant 1 à 4 atomes de carbone ;
- 1 à 25 % d'un ou plusieurs monomères de formule générale : 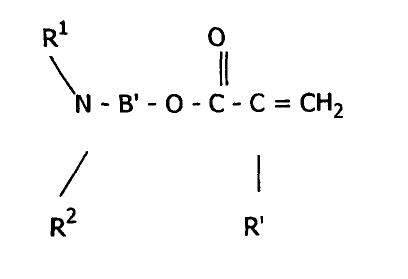 dans laquelle B' représente un radical alkylène, linéaire ou ramifié, contenant 1 à 4 atomes de carbone, R' représente un atome d'hydrogène ou un radical alkyle contenant 1 à 4 atomes de carbone, les symboles R¹ et R², identiques ou différents, représentent chacun un atome d'hydrogène, un radical alkyle linéaire ou ramifié contenant 1 à 18 atomes de carbone ou un radical hydroxyéthyle ou benzyle, ou R¹ et R² ensemble avec l'atome d'azote auquel ils sont liés forment un radical morpholino, pipéridino ou pyrrolidinyle-1 ;
- 1 à 25 % d'un dérivé vinylique de formule générale :

   R"-CH = CH₂

   dans laquelle R" peut être un groupement alkylcarboxylate ou alkyléther contenant de 1 à 18 atomes de carbone.

La réaction de copolymérisation conduisant aux copolymères fluorés décrits par cette demande internationale est effectuée en solution dans un solvant ou mélange de solvants organique(s) miscible(s) à l'eau, et elle est suivie d'une étape de dilution par une solution aqueuse d'un acide minéral ou organique. Cette étape de dilution est réalisée en présence de peroxyde d'hydrogène, ou est suivie d'un traitement au moyen d'une solution aqueuse de peroxyde d'hydrogène.

Après ladite étape de dilution, il est nécessaire de procéder à une distillation sous vide ou un balayage avec un gaz inerte, par exemple l'azote, pour éliminer les composés volatils, et obtenir une composition pouvant être commercialisée, et appliquée sur le substrat à traiter.

Les solvants exemplifiés dans cette demande sont, pour l'essentiel, des mélanges à base de N-méthyl-pyrrolidone. Ces solvants, en raison de leur point d'ébullition, ne sont pas complètement éliminés par l'opération de distillation, de sorte qu'il en demeure des quantités importantes dans la composition commerciale.

Cette composition commerciale se présente ainsi sous la forme d'une solution, ce qui lui confère des propriétés de stabilité bien avantageuses pour son transport et son stockage.

Toutefois, pour certaines applications, et notamment pour le traitement de papiers ou articles similaires destinés au domaine de l'emballage des produits alimentaires, il est souhaitable de diminuer voire de supprimer complètement tout solvant de la composition commerciale.

La demande internationale WO 98/23657 mentionne (cf page 5 lignes 14-15) que l'utilisation de solvants légers permet d'obtenir après distillation une composition commerciale exempte de solvant organique.

Cependant, lors de l'opération de distillation de ces solvants légers, il se produit une précipitation progressive des copolymères fluorés cationiques qui conduit alors à une dispersion aqueuse non stable, c'est-à-dire conduisant à une décantation en quelques heures. Une telle dispersion ne peut pas convenir en tant que composition commercialisable.

Il a, à présent, été trouvé que l'introduction d'un monomère anionique ou potentiellement anionique par variation du pH dans les copolymères décrits par la demande internationale, ainsi qu'une modification de leur procédé de synthèse permet l'obtention de nouveaux copolymères fluorés qui conférent à divers substrats, et notamment au papier, les mêmes propriétés hydrophobes et oléophobes, et qui peuvent, de plus, se présenter sous forme de compositions aqueuses, exemptes de solvants organiques, et stables dans le temps.

Les copolymères fluorés selon la présente invention sont obtenus par polymérisation d'un mélange de monomères comprenant en poids :
***(a)*** de 50 à 92 %, de préférence de 70 à 90 %, d'un ou plusieurs monomères polyfluorés de formule générale : 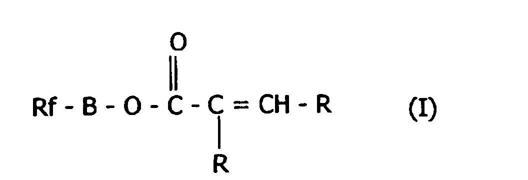 dans laquelle :
   - Rf représente un radical perfluoré à chaîne droite ou ramifiée, contenant 2 à 20 atomes de carbone, de préférence 4 à 16 atomes de carbone,
   - B représente un enchaînement bivalent lié à O par un atome de carbone et pouvant comporter un ou plusieurs atomes d'oxygène, de soufre et/ou d'azote,
   - l'un des symboles R représente un atome d'hydrogène et l'autre un atome d'hydrogène ou un radical alkyle contenant 1 à 4 atomes de carbone ;
***(b)*** de 1 à 25 %, de préférence de 8 à 18 %, d'un ou plusieurs monomères de formule générale : 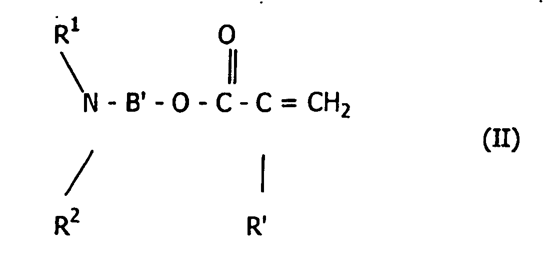 dans laquelle :
   - B' représente un radical alkylène, linéaire ou ramifié, contenant 1 à 4 atomes de carbone,
   - R' représente un atome d'hydrogène ou un radical alkyle contenant 1 à 4 atomes de carbone,
   - les symboles R¹ et R², identiques ou différents, représentent chacun un atome d'hydrogène, un radical alkyle linéaire ou ramifié contenant 1 à 18 atomes de carbone ou un radical hydroxyéthyle ou benzyle, ou R¹ et R² ensemble avec l'atome d'azote auquel ils sont liés forment un radical morpholino, pipéridino ou pyrrolidinyle-1 ;
***(c)*** de 0,5 à 20 %, de préférence de 1 à 10 %, d'un dérivé monooléfinique de l'acide sulfonique, ou d'un sel de métaux alcalins ou alcalino-terreux de celui-ci (III);
***(d)*** de 2 à 10 %, d'un dérivé vinylique de formule générale :

   R"-CH = CH₂ (IV)

   dans laquelle R" peut être un groupement alkylcarboxylate ou alkyléther contenant de 1 à 18 atomes de carbone ;
***(e)*** de 0 à 10 %, de préférence de 0 à 8 %, d'un monomère quelconque autre que les monomères de formules I, II, III, et IV.

En ce qui concerne le monomère (c), on peut notamment citer l'acide acrylamido méthyle propane sulfonique comme exemple de dérivé mono oléfinique de l'acide sulfonique.

Les copolymères fluorés selon la présente invention sont préparés par copolymérisation des monomères en solution dans un solvant organique distillable. On entend par distillable tout solvant organique ou mélange de solvants organiques dont la température d'ébullition à pression atmosphérique est inférieure à 150°C. Le milieu réactionnel est ensuite dilué à l'eau en présence d'un acide minéral ou organique pour salifier les macromolécules.

Selon une variante préférée de l'invention, cette étape de dilution est réalisée en présence de peroxyde d'hydrogène, ou est suivie d'un traitement au moyen d'une solution aqueuse de peroxyde d'hydrogène.

Ces copolymères fluorés sont applicables sur différents supports tels que cuir, non-tissés, matériaux de construction, papier et carton. En particulier, ils peuvent être appliqués sur papier selon différentes techniques (en size-press ou dans la masse) conférant ainsi au papier, sans nécessité d'adjuvants (séquestrants, agents de rétention, résines de fixation) d'excellentes propriétés hydrophobes et oléophobes.

Selon la présente invention, on préfère utiliser :
***(a)*** comme monomères polyfluorés de formule I, les composés de formule : 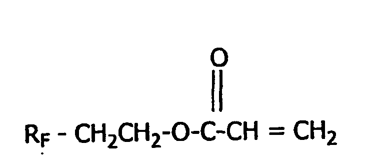 dans laquelle R_{F} est un radical perfluoroalkyle contenant 4 à 16 atomes de carbone ;
***(b)*** le méthacrylate de diméthylaminoéthyle ou le méthacrylate de N-tertiobutylaminoéthyle comme monomère de formule II ;
***(c)*** l'acide acrylamido méthyle propane sulfonique comme monomère III ; et
***(d)*** l'acétate de vinyle comme monomère de formule IV.

Comme solvant organique distillable dans lesquels est effectuée la copolymérisation, on peut mentionner à titre non limitatif des cétones (par exemple l'acétone, la méthyl éthyl cétone), des alcools (par exemple l'isopropanol), des éthers (par exemple le THF ou le dioxane).

Pour la mise en oeuvre de l'invention, on préfère utiliser comme solvant la méthyl isobutyl cétone (MIBK) ou la méthyl ethyl cétone (MEK) ou un mélange de celles-ci avec l'acétone.

La concentration totale des monomères dans le solvant ou mélange de solvants organique(s) peut aller de 20 à 70 % en poids et est de préférence comprise entre 40 et 60 %.

La copolymérisation est effectuée en présence d'au moins un amorceur, utilisé à raison de 0,1 à 2 % par rapport au poids total de monomères. Comme amorceurs, on peut utiliser des peroxydes tels que le peroxyde de benzoyle, le peroxyde de lauroyle, le peroxyde de succinyle et le perpivalate de tert-butyle, ou des composés azoïques comme, par exemple, l'azo-2,2'-bis-isobutyronitrile, l'azo-4,4'-bis(cyano-4-pentanoïque). L'étape de copolymérisation peut être réalisée à une température allant de 40°C jusqu'au point d'ébullition du mélange réactionnel. De préférence, on opère entre 60 et 90°C.

L'étape de dilution consiste à ajouter à la solution organique du copolymère une solution aqueuse d'un acide minéral ou organique fort ou moyennement fort, c'est-à-dire dont la constante de dissociation ou la première constante de dissociation est supérieure à 10⁻⁵.

Comme exemples de tels acides on peut citer les acides chlorhydrique, bromhydrique, sulfurique, nitrique, phosphorique, acétique, formique, propionique ou lactique, mais de préférence on utilise l'acide acétique. La quantité de solution aqueuse à utiliser et sa concentration en acide doivent être suffisantes, d'une part, pour salifier complètement les fonctions amine apportées par le ou les monomère(s) de formule II et, d'autre part, pour obtenir une solution finale de copolymère ayant une teneur en matières sèches comprise entre 5 et 30 %, de préférence entre 20 et 30 %. Pour la salification complète des fonctions amine, la quantité d'acide est avantageusement comprise entre 0 et 5 équivalents acide par rapport au(x) monomère(s) de formule II, de préférence entre 1 et 2 équivalents.

La quantité de peroxyde d'hydrogène utilisée est comprise entre 0 et 10 %, de préférence de 0,5 à 4 % par rapport au poids total de monomères initial. Le traitement s'effectue entre 25 et 100°C, de préférence de 70 à 85°C.

La présente invention a également pour objet les compositions aqueuses comprenant un copolymère fluoré tel que défini précédemment. Les dites compositions sont obtenues en complétant le procédé de fabrication du copolymère fluoré tel que défini précédemment par une étape de distillation, afin d'éliminer toute trace du solvant organique de synthèse. Les compositions aqueuses obtenues ne présentent donc pas de point d'éclair entre 0 et 100°C suivant la norme ASTM D3828. La distillation peut s'effectuer à pression atmosphérique ou réduite. Ces compositions aqueuses se présentent généralement sous forme de dispersions stables au cours du temps. Ainsi ces dispersions demeurent homogènes, et peuvent donc être transportées et stockées tout en demeurant apte à leur mise en oeuvre pour le traitement hydrophobe et oléophobe des substrats. Elles sont également avantageusement diluables à l'eau.

La concentration de copolymère fluoré selon l'invention dans l'eau est généralement comprise entre 1 et 50 %, de préférence entre 20 % et 30 %.

La présente invention a également pour objet un substrat solide comprenant au moins un copolymère fluoré selon l'invention, tel que défini précédemment.

Comme substrats susceptibles d'être rendus oléophobes et hydrophobes avec les produits selon l'invention, on préfère utiliser les papiers, les cartons et les matériaux assimilés. On peut également utiliser d'autres matériaux très divers tels que, par exemple, les articles tissés ou non-tissés à base de cellulose ou de cellulose régénérée, de fibres naturelles, artificielles ou synthétiques comme le coton, l'acétate de cellulose, la laine, la soie, les fibres de polyamide, polyester, polyoléfine, polyuréthane ou polyacrylonitrile, le cuir, les matières plastiques, le verre, le bois, les métaux, la porcelaine, les surfaces peintes. On peut également traiter avec profit les matériaux de construction tels que le béton, la pierre, la brique et les carrelages avec les produits suivant l'invention.

Les compositions aqueuses comprenant un copolymère fluoré, selon l'invention, sont appliquées principalement diluées en milieu aqueux suivant des techniques connues, par exemple par enduction, imprégnation, immersion, pulvérisation, brossage, foulardage, couchage.

Sur papier, les produits selon l'invention peuvent être appliqués en solution aqueuse soit superficiellement sur le support déjà terminé (de préférence à raison de 0,05 à 0,2 % de fluor par rapport au poids de papier), soit dans la masse, c'est-à-dire dans la pâte à papier (de préférence à raison de 0,2 à 0,4 % de fluor par rapport au poids de pâte).

Les supports ainsi traités présentent de bonnes propriétés oléophobes et hydrophobes après un simple séchage à température ambiante ou à température élevée, suivi éventuellement d'un traitement thermique pouvant aller, suivant la nature du support, jusqu'à 200°C.

Pour obtenir une bonne fixation des copolymères fluorés selon l'invention sur les substrats sur lesquels ils sont appliqués et pour conférer en plus un effet particulier, il est parfois avantageux de les associer avec certains adjuvants, polymères, produits thermocondensables et catalyseurs susceptibles de favoriser leur réticulation avec le support. Comme tels, on peut citer les condensats ou précondensats d'urée formol ou de mélamine formol, les dérivés époxy comme le diglycidylglycérol, les résines polyamine-épichlorhydrine, le glyoxal et ses dérivés, les alcools polyvinyliques et les amidons cationiques, oxydés et amphotères.

Il peut également être avantageux d'associer les copolymères fluorés selon l'invention avec un ou plusieurs tensioactifs non ionique(s) et/ou cationique(s) pour améliorer le mouillage du support. Le poids de ce ou ces tensioactifs par rapport au poids total de copolymère peut varier de 0 à 100 %.

Les tensioactifs peuvent être ajoutés dans la solution organique durant la réaction de copolymérisation, pendant la dilution ou dans la composition aqueuse obtenue après distillation du solvant. Ils peuvent également être ajoutés au moment de l'application des copolymères selon l'invention.

Pour évaluer les performances des substrats traités selon l'invention, on a utilisé les tests suivants :

### • Test d'ingraissabilité ou "kit value"

Ce test décrit dans Tappi, vol. 50, n°10, pages 152A et 153A, norme RC 338 et UM 511, permet de mesurer l'ingraissabilité des substrats par des mélange d'huile de ricin, de toluène et d'heptane. Ceux-ci contiennent des quantités variables de ces trois produits :

| **Nombre Kit (Kit Value)** | **Volume d'huile de ricin** | **Volume de toluène** | **Volume d'heptane** |
|---|---|---|---|
| 1 | 200 | 0 | 0 |
| 2 | 180 | 10 | 10 |
| 3 | 160 | 20 | 20 |
| 4 | 140 | 30 | 30 |
| 5 | 120 | 40 | 40 |
| 6 | 100 | 50 | 50 |
| 7 | 80 | 60 | 60 |
| 8 | 60 | 70 | 70 |
| 9 | 40 | 80 | 80 |
| 10 | 20 | 90 | 90 |
| 11 | 0 | 100 | 100 |
| 12 | 0 | 90 | 110 |

Le test consiste à déposer doucement sur le papier traité des gouttes de ces mélanges. On laisse les gouttes sur le papier durant 15 secondes, puis on observe soigneusement l'aspect des papiers ou cartons et on note le mouillage ou la pénétration mis en évidence par un brunissement de la surface. Le nombre correspondant au mélange contenant le pourcentage le plus élevé d'heptane, qui ne pénètre pas ou ne mouille pas le papier, est la "kit value" du papier et est considéré comme étant le taux d'oléophobie du papier traité. Plus la "kit value" est élevée, meilleure est l'oléophobie du papier.

### • Test de Cobb

Le test de Cobb [NF EN 20535-ISO 535 (1994)] consiste à mesurer le poids (en g) d'eau absorbée pendant une minute par un mètre carré de papier supportant une hauteur d'eau d'un centimètre.

### • Test de résistance aux croquettes

Dans une étuve climatique à 60°C et 65 % d'humidité relative, on dépose sur une surface de 100 cm² du papier traité, 200 g de croquettes pour chiens de marque ROYAL CANIN (qualité ST 35).

L'ensemble est posé sur un papier non traité, absorbant (type papier filtre) de même surface. Après quoi, on pose sur le tout un poids de 3,5 kg et on laisse à l'étuve pendant 3 jours.

La diffusion des graisses est évaluée en mesurant la surface totale des taches qui sont apparues sur le papier absorbant. On considère que la barrière aux graisses est efficace quand la surface tachée est inférieure à 10 % de la surface totale du papier absorbant. Cette valeur est appelée pourcentage de transpercement.

### • Test d'oléophobie

Sur certains supports, l'oléophobie a été mesurée suivant la méthode décrite dans « AATCC Technical Manual », Test Method 118-1992, qui évalue la non-mouillabilité du substrat par une série de liquides huileux numérotés de 1 à 8 :
- N° 1 Huile de Vaseline
- N° 2 Huile de Valeline/n-Hexadécane (64/35)
- N° 3 n-Hexadécane
- N° 4 n-Tétradécane
- N° 5 n-Dodécane
- N° 6 n-Décane
- N° 7 n-Octane
- N° 8 n-Heptane

Le test consiste à déposer sur les substrats traités des gouttes de ces mélanges, puis à observer l'effet de la goutte après 30 secondes de contact. La cotation se fait en donnant la valeur du numéro de la dernière goutte de liquide qui n'a ni pénétré, ni mouillé le substrat.

### • Test d'hydrophobie

La méthode est adaptée du test d'oléophobie. Les liquides de test numérotés de 1 à sont des mélanges pondéraux d'eau déminéralisée et de Propanol 2.

| | **Composition pondérale** | |
|---|---|---|
| **Références des liquides tests** | **Eau déminéralisée** | **Propanol-2** |
| 1 | 90 | 10 |
| 2 | 80 | 20 |
| 3 | 70 | 30 |
| 4 | 60 | 40 |
| 5 | 50 | 50 |
| 6 | 40 | 60 |
| 7 | 30 | 70 |
| 8 | 20 | 80 |
| 9 | 10 | 90 |
| 10 | 0 | 100 |

Le test consiste à déposer sur les substrats traités des gouttes de ces mélanges, puis l'effet de la goutte après 30 secondes de contact. La cotation se fait en donnant la valeur du numéro de la dernière goutte de liquide qui n'a ni pénétré, ni mouillé le substrat.

Dans les exemples suivants les parties indiquées sont en poids, sauf mention contraire.

### EXEMPLE COMPARATIF 1A

Dans un réacteur de 600 parties en volume, équipé d'une agitation, d'un thermomètre, d'un réfrigérant à reflux, d'une ampoule de coulée, d'une arrivée d'azote et d'un dispositif de chauffage, on charge 40 parties de MIBK, 2 parties de MEK, 27 parties d'acétone, 16 parties de méthacrylate de diméthylaminoéthyle, 8,8 parties d'acétate de vinyle, 1,2 parties d'acide méthacrylique, 81,4 parties d'un mélange d'acrylates fluorés de formule : 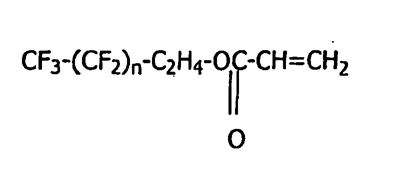 où n est égal à 5, 7, 9, 11 et 13 dans des rapports en poids moyens et respectifs de 1/63/25/9/3 et 0,4 partie d'acide 4,4'-azobis(cyano-4-pentanoïque).

On chauffe à 70°C sous atmosphère d'azote pendant 4,5 heures, puis on porte la température à 78°C. 0,5 heures après, on introduit 0,32 parties d'acide 4,4'-azobis(cyano-4-pentanoïque) et on laisse le réacteur à 78°C pendant 3 heures.

Puis on coule à 70°C une solution aqueuse comportant 290 parties d'eau, 8 parties d'acide acétique et 2,5 parties d'eau oxygénée à 35 % en poids.

On maintient deux heures à 70°C sous balayage d'azote, puis on distille la solution sous pression réduite de manière à obtenir une solution à 25% de copolymère fluoré selon l'invention.

Puis on refroidit jusqu'à la température ambiante. On obtient ainsi 410 parties d'une dispersion ambrée (S1) parfaitement stable dans le temps.

Cette dispersion ne comprend pas de solvant organique, et ne présente donc pas de point d'éclair entre 0 et 100°C selon la norme ASTM D3828.

### EXEMPLE COMPARATIF 1B

On procède comme dans l'exemple comparatif 1A, mais en supprimant totalement l'acide méthacrylique et en le remplaçant poids pour poids par de l'acétate de vinyle.

On obtient alors 410 parties d'une dispersion ambrée (Sc1) comprenant un copolymère fluoré conforme à la demande internationale WO 98/23657. Cette dispersion décante au bout de quelques heures.

### EXEMPLE COMPARATIF 2A

On procède comme dans l'exemple comparatif 1A mais en rajoutant 1,8 parties d'acide méthacrylique au détriment poids pour poids de l'acétate de vinyle, soient 3 parties d'acide méthacrylique et 7 parties d'acétate de vinyle.

On obtient alors 410 parties d'une dispersion ambrée (S2) parfaitement stable et sans solvant, contenant 25 % de copolymère fluoré.

### EXEMPLE COMPARATIF 2B

On procède comme dans l'exemple comparatif 2A mais d'une part, en remplaçant le mélange de solvant MIBK, MEK et Acétone par 90 parties de NMP et 10 parties d'acétone ; et d'autre part en n'utilisant que 200 parties d'eau pour la dilution.

On obtient alors 410 parties d'une solution ambrée (Sc2) très stable, mais qui contient encore une quantité de NMP, supérieure à 20 %.

### EXEMPLE COMPARATIF 3

On utilise les solutions (S1), (Sc1), (S2), et (Sc2).

Avec ces différents constituants, on prépare les bains de size-press décrits dans le tableau ci-dessous.

| **Constituants du bain (g/l)** | **Numéro du bain** | | | |
|---|---|---|---|---|
| | **1** | **2** | **3** | **4** |
| Solution Si | 15 | | | |
| Solution Sc1 | | 15 | | |
| Solution S2 | | | 15 | |
| Solution Sc2 | | | | 15 |
| Eau | 985 | 985 | 985 | 985 |
| **TOTAL** | 1000 | 1000 | 1000 | 1000 |

Le pH des bains est réglé à 6,5. Les différentes compositions sont appliquées en size-press sur un papier composé de pâte blanchie, non collé, de 70g/m². Le taux d'absorption du bain par le papier (connu dans le métier sous la dénomination de "taux d'emport") est de l'ordre de 80 %. Après séchage pendant une minute à 120°C, les papiers ainsi traités sont stockés pendant 1 jour à température ambiante puis soumis aux différents tests.

Les résultats obtenus sont regroupés dans le tableau suivant :

| **Tests** | **Papier traité avec le bain n°** | | | | **Papier non traité** |
|---|---|---|---|---|---|
| | **1** | **2** | **3** | **4** | |
| Kit value | 12 | 10 | 11 | 12 | 0 |
| Cobb (g/m²) | 19 | 20 | 19 | 21 | > 100 |
| Transpercement (%) | 0 | 100 | 0 | 0 | 100 |

La comparaison des résultats obtenus avec les papiers 1 et 3 d'une part, et le papier 4 d'autre part, montre que les performances des copolymères fluorés sous forme de compositions aqueuses sont comparables à celles des copolymères fluorés de la demande internationale WO 98/23657 sous forme de solution comprenant un solvant organique.

De plus, la comparaison des résultats obtenus avec les papiers 1 et 3 d'une part, et le papier 2 d'autre part, montre que l'introduction comme monomère de l'acide méthacrylique permet d'obtenir un effet de barrière aux graisses qui est largement amélioré.

### EXEMPLE COMPARAIF 4

On utilise également les solutions (S1) et (Sc2).

20 g de pâte KRAFT blanchie à base de feuillus, raffinée à 25°SR, sont dispersés dans 2,4 l d'eau pendant 45 mn, le pH étant ajusté à 6,5 avec H₂SO₄. On ajoute alors sous agitation dans cette préparation 0,6 g de solution. On sépare le tout en 9 fractions de 270 g. Chaque fraction est diluée par 2 l d'eau sous agitation dans un bol d'un appareil FRANK et filtrée sous vide pour obtenir une formette. La formette est enfin séchée sous vide pendant 5 mn à 90°C sur les plaques de l'appareil FRANK. Les caractéristiques des feuilles de papier ainsi traitées dans la masse avec chaque solution sont données par le tableau suivant :

| **Tests** | **Formette issue de la pâte ex** | | **Formette Non traitée** |
|---|---|---|---|
| | **S1** | **Sc2** | |
| Kit value | 12 | 12 | 0 |
| Cobb (g/m²) | 19 | 20 | > 100 |

La comparaison des résultats obtenus pour les formettes issues des pâtes S1 et Sc2 montre que les performances du copolymère fluoré sous forme de composition aqueuse sont comparables à celles du copolymère fluoré de la demande internationale WO 98/23657 sous forme de solution comprenant un solvant organique.

### EXEMPLE COMPARATIF 5

On utilise également les solutions (S1) et (Sc2). On dilue chaque solution dans l'eau, à température ambiante, jusqu'à obtenir une solution aqueuse contenant 2% de copolymère fluoré.

Cette solution est ensuite pulvérisée en croix sur les échantillons de cuir stain agneau à l'aide d'un pulvérisateur Volumair T21. La quantité déposée est en moyenne de 150 g/m². Après un séchage de 24 heures à température ambiante, les cuirs sont testés.

Leurs caractéristiques sont rapportées dans le tableau sui

| **Tests** | **Stain Agneau traité par** | | **Témoin** |
|---|---|---|---|
| | **(S1)** | **(Sc2)** | |
| Test d'oléophobie | 4 | 4 | 0 |
| Test d'hydrophobie | 8 | 5 | 0 |

Ce tableau montre l'efficacité remarquable des produits pour conférer au cuir de bonnes propriétés hydrofuge et oléofuge. Le copolymère fluoré sous forme de dispersion aqueuse (S1) a de meilleures propriétés que le copolymère fluoré de la demande WO 98/23657, sous forme de solution (Sc2) comprenant un solvant organique.

### EXEMPLE COMPARATIF 6

On procède exactement comme dans l'exemple 5 pour traiter un tissu de polyamide avec (S1).

Les résultats sont exprimés dans le tableau suivant :

| **Tests** | **Polyamide traité** | **Témoin** |
|---|---|---|
| | **Par (S1)** | |
| Test d'oléophobie | 4 | 0 |
| Test d'hydrophobie | 8 | 0 |

Ce tableau montre l'efficacité remarquable du produit pour apporter des propriétés hydrofuge et oléofuge sur textile.

## Revendications

1. Copolymères fluorés susceptibles d'être obtenus par polymérisation d'un mélange de monomères comprenant en poids :
*(a)* de 50 à 92 %, de préférence de 70 à 90 %, d'un ou plusieurs monomères polyfluorés de formule générale : 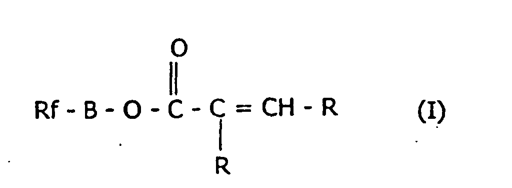 dans laquelle :
- Rf représente un radical perfluoré à chaîne droite ou ramifiée, contenant 2 à 20 atomes de carbone, de préférence 4 à 16 atomes de carbone,
- B représente un enchaînement bivalent lié à O par un atome de carbone et pouvant comporter un ou plusieurs atomes d'oxygène, de soufre et/ou d'azote,
- l'un des symboles R représente un atome d'hydrogène et l'autre un atome d'hydrogène ou un radical alkyle contenant 1 à 4 atomes de carbone ;
*(b)* de 1 à 25 %, de préférence de 8 à 18 %, d'un ou plusieurs monomères de formule générale : 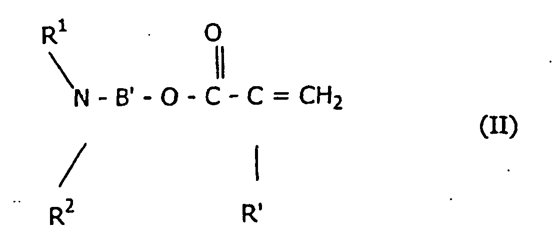 dans laquelle :
- B' représente un radical alkylène, linéaire ou ramifié, contenant 1 à 4 atomes de carbone,
- R' représente un atome d'hydrogène ou un radical alkyle contenant 1 à 4 atomes de carbone,
- les symboles R¹ et R², identiques ou différents, représentent chacun un atome d'hydrogène, un radical alkyle linéaire ou ramifié contenant 1 à 18 atomes de carbone ou un radical hydroxyéthyle ou benzyle, ou R¹ et R² ensemble avec l'atome d'azote auquel ils sont liés forment un radical morpholino, pipéridino ou pyrrolidinyle-1 ;
(c) de 0,5 à 20 %, de préférence de 1 à 10 %, d'un dérivé monooléfinique de l'acide sulfonique, ou d'un sel de métaux alcalins ou alcalino-terreux de celui-ci (III);
*(d)* de 2 à 10 %, d'un dérivé vinylique de formule générale :
R"-CH = CH₂ (IV)
dans laquelle R" peut être un groupement alkylcarboxylate ou alkyléther contenant de 1 à 18 atomes de carbone ;
*(e)* de 0 à 10 %, de préférence de 0 à 8 %, d'un monomère quelconque autre que les monomères de formules I, II, III, et IV ;
la dite copolymérisation comprenant :
- la mise en solution des monomères dans un solvant organique distillable ; puis
- la dilution du milieu réactionnel à l'eau en présence d'un acide minéral ou organique pour salifier les macromolécules.

2. Copolymères fluorés selon la revendication 1, **caractérisés en ce que** la dilution à l'eau est réalisée en présence de peroxyde d'hydrogène, ou est suivie d'un traitement au moyen d'une solution aqueuse de peroxyde d'hydrogène.

3. Copolymères fluorés selon l'une des revendications 1 ou 2, **caractérisés en ce que** l'on utilise :
*(a)* comme monomères polyfluorés de formule I, les composés de formule : 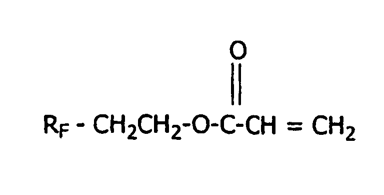 dans laquelle R_{F} est un radical perfluoroalkyle contenant 4 à 16 atomes de carbone ;
*(b)* le méthacrylate de diméthylaminoéthyle ou le méthacrylate de N-tertiobutylaminoéthyle comme monomère de formule II ;
(c) l'acide acrylamido méthyle propane sulfonique comme monomère III; et
(d) l'acétate de vinyle comme monomère de formule IV.

4. Copolymères fluorés selon l'une des revendications 1 à 3, **caractérisés en ce que** l'on utilise comme solvant organique la méthyl isobutyl cétone (MIBK) ou la méthyl ethyl cétone (MEK) ou un mélange de celles-ci avec l'acétone.

5. Copolymères fluorés selon l'une des revendications 2 à 4, **caractérisés en ce que** la quantité de peroxyde d'hydrogène utilisée est comprise entre 0 et 10 %, de préférence de 0,5 à 4 % par rapport au poids total de monomères initial.

6. Compositions aqueuses comprenant de 1 à 50 %, de préférence de 20 à 30 % d'un copolymère fluoré tel que défini dans l'une des revendications 1 à 5.

7. Substrat solide comprenant au moins un copolymère fluoré tel que défini dans l'une des revendications 1 à 5.

8. Substrat solide selon la revendication 7, **caractérisé en ce qu'**il s'agit de papier ou de carton.

## Patentansprüche

1. Fluorhaltige Copolymere, welche in der Lage sind erhalten zu werden durch Polymerisation eines Gemisches von Monomeren, welches gewichtsmäßig enthält:
a) von 50 bis 92%, vorzugsweise von 70 bis 90%, von einem oder von mehreren polyfluorhaltigen Monomeren mit der allgemeinen Formel: 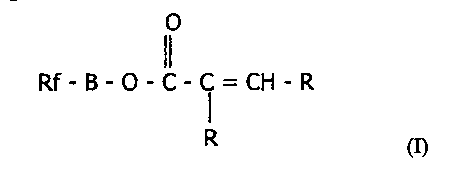 in welcher:
- Rf ein perfluorhaltiges Radikal mit einer geraden oder einer verzweigten Kette darstellt, welche 2 bis 20 Kohlenstoffatome, vorzugsweise 4 bis 16 Kohlenstoffatome enthält,
- B eine zweiwertige Verkettung darstellt, welche durch ein Kohlenstoffatom mit O verbunden ist und ein oder mehrere Atome Sauerstoff, Schwefel und/oder Stickstoff enthalten kann,
- eines der Symbole R ein Atom Wasserstoff darstellt und das andere ein Atom Wasserstoff oder ein Radikal Akyl mit 1 bis 4 Kohlenstoffatomen darstellt;
b) von 1 bis 25%, vorzugsweise von 8 bis 18%, von einem oder von mehreren Monomeren mit der allgemeinen Formel: 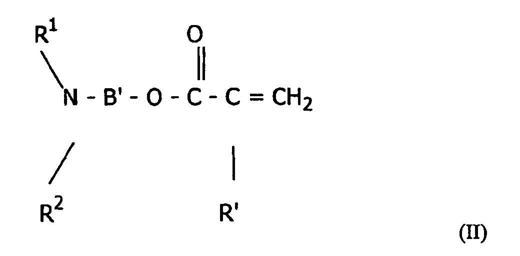 in welcher:
- B' ein Radikal Alkylen, linear oder verzweigt, mit 1 bis 4 Kohlenstoffatomen darstellt,
- R' ein Atom Wasserstoff oder ein Radikal Alkyl mit 1 bis 4 Kohlenstoffatomen darstellt,
- die Symbole R¹ und R², identisch oder verschieden, ein jedes ein Atom Wasserstoff, ein lineares oder ein verzweigtes Radikal Akyl mit 1 bis 18 Kohlenstoffatomen oder ein Radikal Hydroxyethyl oder Benzyl darstellen, wobei R¹ und R², zusammen mit dem Atom Stickstoff an welches sie gebunden sind, ein Radikal Morpholin, Piperidin oder Pyrrolidinyl-1 bilden;
c) von 0,5 bis 20%, vorzugsweise von 1 bis 10% eines monoolefinischen Derivates der Sulfosäure, oder eines Salzes von Alkalimetallen oder von Erdalkalimetallen eines solchen (III);
d) von 2 bis 10% eines Vinylderivates mit der allgemeinen Formel:
R"-CH=CH₂ (IV)
in welcher R" eine Alkylcarboxylat- oder Alkylether-Gruppierung mit 1 bis 18 Kohlenstoffatomen sein kann;
e) von 0 bis 10%, vorzugsweise von 0 bis 8% eines beliebigen Monomers sein kann, welches verschieden ist von den Monomeren mit den allgemeinen Formeln I, II, III und IV;
wobei die besagte Copolymerisation umfasst:
- das Auflösen der Monomere in einem destillierbaren, organischen Lösungsmittel; alsdann
- das Verdünnen des Reaktionsmediums mit Wasser in Gegenwart einer anorganischen oder einer organischen Säure, um die Salze der Makromoleküle herzustellen.

2. Fluorhaltige Copolymere gemäß Anspruch 1, **dadurch gekennzeichnet, dass** die Verdünnung mit Wasser in Gegenwart von Wasserstoffperoxyd vorgenommen wird oder gefolgt ist von einer Behandlung mit Hilfe einer wässerigen Lösung von Wasserstoffperoxyd.

3. Fluorhaltige Copolymere gemäß einem der Ansprüche 1 oder 2, **dadurch gekennzeichnet, dass** man zum Einsatz bringt:
a) als polyfluorhaltige Monomere mit der Formel I, die Verbindungen mit der Formel: 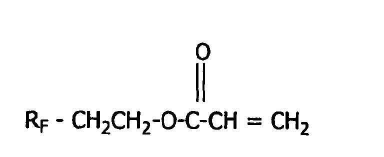 in welcher Rf aus einem Radikal Perfluoralkyl mit 4 bis 16 Kohlenstoffatomen besteht;
b) das Dimethylaminoethyl-methacrylat oder das N-tertio-Butylaminoethylmethacrylat als Monomer mit der Formel II,
c) die Acrylamido-methylpropansulfosäure als Monomer mit der Formel III,
d) das Vinylacetat als Monomer mit der Formel IV,

4. Fluorhaltige Copolymere gemäß einem der Ansprüche 1 bis 3, **dadurch gekennzeichnet, dass** man als organisches Lösungsmittel das Methylisobutylketon (MIBK) benutzt oder das Methylethylketon (MEK) oder eine Mischung von diesen in Aceton.

5. Fluorhaltige Copolymere gemäß einem der Ansprüche 2 bis 4, **dadurch gekennzeichnet, dass** die Menge an verwendetem Wasserstoffperoxyd zwischen 0 und 10%, vorzugsweise zwischen 0,5 und 4% liegt, dies in Bezug auf das Gesamtgewicht der anfänglichen Monomere.

6. Wässerige Zusammensetzungen mit 1 bis 50%, vorzugsweise mit 20 bis 30% eines fluorhaltigen Copolymers, so wie dasselbe in einem der Ansprüche von 1 bis 5 definiert worden ist.

7. Festes Substrat welches mindestens ein fluorhaltiges Copolymer von der Art enthält wie sie in einem der Ansprüche von 1 bis 5 definiert worden ist.

8. Substrat gemäß Anspruch 7, **dadurch gekennzeichnet**, das es sich um Papier oder Pappe handelt.

## Claims

1. Fluorocopolymers obtainable by polymerization of a monomer mixture comprising by weight:
(a) from 50 to 92%, preferably from 70 to 90%, of one or more polyfluoromonomers of general formula: 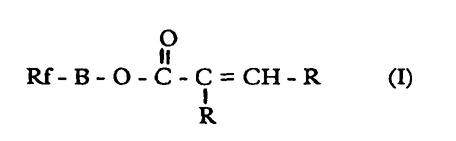 wherein:
Rf represents a perfluorinated radical having a straight or branched chain, containing 2 to 20 carbon atoms, preferably 4 to 16 carbon atoms,
B represents a divalent linking group which is bound to O by a carbon atom and which may comprise one or more oxygen, sulphur and/or nitrogen atoms,
one of the symbols R represents a hydrogen atom and the other a hydrogen atom or an alkyl radical containing 1 to 4 carbon atoms;
(b) from 1 to 25%, preferably from 8 to 18%, of one or more monomers of general formula: 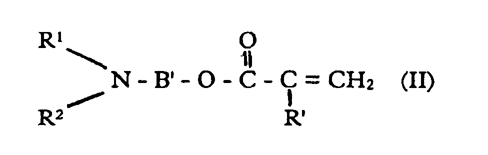 wherein:
B' represents a straight-chain or branched alkylene radical containing 1 to 4 carbon atoms,
R' represents a hydrogen atom or an alkyl radical containing 1 to 4 carbon atoms,
the symbols R¹ and R², which are identical or different, each represent a hydrogen atom, a straight-chain or branched alkyl radical containing 1 to 18 carbon atoms or a hydroxyethyl or benzyl radical, or R¹ and R² together with the nitrogen atom to which they are linked form a morpholino, piperidino or pyrrolidin-1-yl radical;
(c) from 0.5 to 20%, preferably from 1 to 10%, of a monoolefinic derivative of sulphonic acid, or an alkali or alkaline-earth metal salt thereof;
(d) from 2 to 10% of a vinyl derivative of general formula:
R"-CH=CH₂ (IV)
wherein R" may be an alkyl carboxylate or alkyl ether group containing from 1 to 18 carbon atoms;
(e) from 0 to 10%, preferably from 0 to 8%, of any monomer other than the monomers of formulae I, II, III and IV;
the said copolymerization comprising:
- dissolving the monomers in a distillable organic solvent; and then
- diluting the reaction mixture with water in the presence of an inorganic or organic acid in order to salify the macromolecules.

2. Fluorocopolymers according to claim 1, **characterized in that** the dilution with water is carried out in the presence of hydrogen peroxide or is followed by a treatment by means of an aqueous hydrogen peroxide solution.

3. Fluorocopolymers according to either of claims 1 and 2, **characterized in that** the following are used:
(a) as polyfluoromonomers of formula I, the compounds of formula: 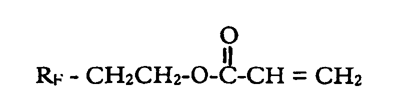 in which R_{F} is a perfluoroalkyl radical containing 4 to 16 carbon atoms;
(b) dimethylaminoethyl methacrylate or N-tert-butylaminoethyl methacrylate as monomer of formula II;
(c) acrylamidomethylpropanesulphonic acid as monomer III; and
(d) vinyl acetate as monomer of formula IV.

4. Fluorocopolymers according to one of claims 1 to 3, **characterized in that** methyl isobutyl ketone (MIBK) or methyl ethyl ketone (MEK), or a mixture of these with acetone, is used as the organic solvent.

5. Fluorocopolymers according to one of claims 2 to 4, **characterized in that** the amount of hydrogen peroxide used is between 0 and 10%, preferably between 0.5 and 4%, with respect to the total initial weight of monomers.

6. Aqueous compositions comprising from 1 to 50%, preferably from 20 to 30%, of a fluorocopolymer as defined in one of claims 1 to 5.

7. Solid substrate comprising at least one fluorocopolymer as defined in one of claims 1 to 5.

8. Solid substrate according to claim 7, **characterized in that** it is paper or board.
